# EUROPÄISCHE PATENTSCHRIFT

(11) **EP 0 544 846 B1**
(45) Veröffentlichungstag und Bekanntmachung des Hinweises auf die Patenterteilung: **28.08.1996**
(21) Anmeldenummer: 92908370.7
(22) Anmeldetag: 29.04.1992
(51) Int. Cl.: A21C 1/00, A21C 1/06

(54) **VERFAHREN ZUR HERSTELLUNG EINES KNÖLLCHENFÖRMIGEN PRODUKTES**
PROCESS FOR MAKING A NODULAR PRODUCT
PROCEDE POUR LA FABRICATION D'UN PRODUIT SOUS FORME DE GRAINS

(30) Priorität: 18.06.1991 CH 1802/91
(43) Veröffentlichungstag der Anmeldung: 09.06.1993
(73) Patentinhaber: BÜHLER AG, CH-9240 Uzwil (CH)
(72) Erfinder: MANSER, Josef, CH-9240 Uzwil (CH); EGGER Friedrich, CH-9244 Niederuzwil (CH); SEILER, Werner, CH-9523 Züberwangen (CH)
(86) Internationale Anmeldenummer: CH9200085
(87) Internationale Veröffentlichungsnummer: WO9222208

(56) Entgegenhaltungen:
- WO-A-89/04610
- FR-A- 1 111 650
- FR-A- 2 390 990
- US-A- 3 251 695

## Beschreibung

### Technisches Gebiet

Die Erfindung betrifft ein Verfahren zur Herstellung eines knöllchenförmigen Produktes aus Mehl, Dunst oder Griess.

### Stand der Technik

Jede industrielle Verarbeitung von Getreidemahlprodukten mit Wasserzugaben auf einen Wassergehalt der Produkte von über 25% ist mit mehreren Problemkreisen konfrontiert. Es stellt sich als erstes die Frage, welche Struktur das Produkt nach der Verarbeitung aufweisen soll, dies betrifft insbesondere das Protein. Ferner ist ein ganz wesentlicher Verarbeitungsfaktor der Zustand der Stärke; soll diese nach der Verarbeitung ungekocht oder gekocht bzw. gelatiniert sein. Welche äussere Form soll das Endprodukt erhalten. Insbesondere ergeben sich spezifische Anforderungen durch die biologischen sowie biochemischen Eigenheiten der Getreidemahlprodukte, z. B. in Bezug auf Reinigung resp. Reinhaltung der Anlage. Sehr wichtig ist dabei die Hygiene.

Jedes mikrobielles Verderbnis muss vermieden werden. Die entsprechende Gefahr ist, wegen der hohen Produktfeuchtigkeit sowie einer, für die Vermehrung von störenden Mikroben "idealen" Temperatur (20 - 40°C) des frisch befeuchteten Produktes, gross.

So lange das Mahlprodukt noch im natürlichen Zustand ist, geht das Eiweiss mit dem zugegebenen Wasser und einer mechanischen (Knet-) Einwirkung, biochemische Bindungen ein. Zwischen den durch die Vermahlung zerstückelten Mehlteilchen wird erneut ein Proteingerüst ausgebildet, das dem Fertigprodukt z.B. eine gute Formfestigkeit, Kochfestigkeit und gute Bisseigenschaften gibt.

In der Folge werden nun die besonderen Probleme für die Herstellung eines knöllchenförmigen Produktes anhand der Cous-Cous Fabrikation erläutert. Cous-Cous ist ein industriell hergestelltes, vorgekochtes Getreideprodukt, das in der Beschaffenheit, in essfertigem Zustand mit Reis sehr grosse Ähnlichkeit hat. Im Gegensatz zum Mahlprodukt als solchem (Mehl, Dunst, Griess) ist das Cous-Cous lange haltbar, und kann ähnlich wie Teigwaren gelagert werden, wenn die Produktfeuchtigkeit unter 12% liegt.

Ein industrielles Verfahren für die Cous-Cous-Herstellung ist in der schweizerischen Patentschrift CH-PS Nr. 612 835 beschrieben. Das Rohmaterial (Mehl, Griess oder Dunst) wird in genauer Mengendosierung mit entsprechender Wasserzugabe einem Mischtrog mit langsam umlaufender Mischwelle während etwa 14 bis 15 Minuten gut vermischt, wie dies z.B. in der FR-A-23 39 344 beschrieben ist. Es bilden sich dabei Klumpen von etwa 10 - 40mm Grösse, die nachfolgend in einer Zentrifugalschlageinrichtung auf eine Grösse kleiner als 6mm reduziert werden. Es wurde angestrebt, die Einzelteile in einer Grösse gleich oder grösser als die entsprechenden Dimension des Fertigproduktteilchens zu dämpfen bzw. zu gelatinieren.

Die gewünschte Granulatgrösse wird erst nach dem Trocknungsprozess durch eine Reduktion der Agglomerate erreicht. Der unerwünschte Feinanteil wird dem Rohmaterial zugeführt. Damit konnten in der Praxis beste Endproduktqualitäten erzielt werden. Als wesentlicher Nachteil wurde aber die Rückführung von 14 bis zu 20% des Feinanteiles empfunden, insbesondere da die ganze Anlage um diesen Prozentsatz in der Leistungsfähigkeit herabgesetzt wurde. Um diesen Missstand beheben zu können, wurde in der Folge das Produkt vor dem Dämpfen nass gesiebt und nur noch die Fraktion mit der Agglomerat-Grösse von 1 - 4mm gedämpft. Alle übergrossen Agglomerate gehen wieder zurück in den Mischtrog. Auch so konnte ein qualitativ einwandfreies Endprodukt gewonnen werden und die Belastung sowohl für die Dämpfung als auch für die Trocknung in ein optimales Verhältnis gebracht werden. Es stellten sich aber zwei neue Engpässe ein. Es musste nun eine so grosse Menge an übergrossen Agglomeraten zurück in den Mischtrog geführt werden, dass dieser auf den doppelten Durchsatz erhöht werden musste. Die Nassiebung brachte insofern Schwierigkeiten, als eine periodisch und häufige Reinigung und sogar Auswechslung der Siebe vorgenommen werden musste, da sonst die Siebe verstopften.

Gemäss der WO-A-89 04 610 ist es auch bekannt, Teigstücke, grösser 1cm mit einem vollständigen Proteingerüst durch intensives Kneten und Wirken und vorangehendem Mischen und Befeuchten des Rohmaterials auf 25 - 40% Wassergehalt in einem Doppelwellen-Kneter herzustellen. Der apparative Aufwand ist jedoch gross.

### Darstellung der Erfindung

Der Erfindung wurde nun die Aufgabe zugrunde gelegt, ein neues Verfahren zu schaffen, die die aufgezeigten Mängel behebt, insbesondere eine optimale Gesamtprozessführung erlaubt, dies sowohl im Hinblick auf die Wirtschaftlichkeit der Anlage, so dass aber trotzdem eine unvermindert gute Qualität der Endprodukte erreichbar ist.

Diese Aufgabe ist erfindungsgemäss dadurch gelöst, dass das Rohmaterial in einem Schleuderkneter auf 25 - 40% Wassergehalt aufgefeuchtet und über eine Agglomeration direkt in eine Knöllchenstruktur gebracht wird, wobei die Knöllchen eine übliche Grösse von 3 bis 4mm aufweisen.

Erst aufgrund der neuen Erfindung ist erkannt worden, dass die ersten Ansätze für die industrielle Herstellung von einem bis dahin handwerklich gefertigten Produkt an sich richtig war, dass aber wegen mangelnder Kenntnisse der Gesetzmässigkeiten des Verarbeitungsprozesses die blosse Nachahmung der handwerklichen Abläufe nicht zu einer optimalen industriellen Lösung geführt haben.

Untersuchungen haben nämlich gezeigt, dass die einzelnen Granulate des gekochten Cous-Cous gar nicht Agglomerate sind, sondern eine Struktur mit sehr gut ausgebildetem Proteingerüst aufweisen, ähnlich der von verpressten Teigwaren. Die Proteinstruktur gibt auch dem tellerfertigen Cous-Cous die reisartige Beschaffenheit. Erfindungsgemäss wird nun vorgeschlagen, das Rohmaterial nicht einfach in eine agglomerierte, sondern direkt in eine Knöllchen-Struktur zu bringen.

Unter Agglomerat wird ein sehr schlecht definierbares lockeres Gefüge von Partikeln verstanden, die meist ohne grosse Kräfte wieder in ihre ursprüngliche Teile zerfallen. Dagegen bedeutet Knöllchenstruktur eine z. B. mit Mikroskop feststellbare Bindestruktur, vorwiegend über das Proteingerüst.

Verschiedentlich ist versucht worden, das Rohmaterial sowie das Wasser in sogenannten Schleudermischern vorzubereiten, ohne dass damit ein echter positiver Effekt auf das Gut festgestellt wurde.

Erfindungsgemäss ist nun aber erkannt worden, dass der Knöllchenbildungsvorgang ein graduell voranschreitender Prozess ist, der bisher mit dem Misch- und Agglomerierungsvorgang vorzeitig abgebrochen wurde. Der Aufbau des Proteingerüstes braucht aber neben einem optimalen Wassergehalt eine echte mechanische Krafteinwirkung, es muss dafür genau gleich wie bei der Teigbildung in der Küche "Kraft", Energie aufgewendet werden. Es ist ferner erkannt worden, dass der Aufbau des Proteingerüstes bei günstigen Rahmenbedingungen sehr rasch gemacht ist, dies nicht nur mit der klassischen Modellvorstellung des Teigknetens.

Die neue Erfindung erlaubt eine ganze Reihe von besonders vorteilhaften weiteren Ausgestaltungen. So wird bevorzugt, eine Einwirkungszeit in dem Schleuderkneter von wenigstens 5 - 30 Sekunden gewählt, wobei die Einwirkzeit z. B. durch bestimmte Schräg-Stellungen von Schleuderelementen, ob diese eine mehr vorwärtsfördernde oder hemmende Wirkung haben. Eine zeitliche Verlängerung der Knöllchenbildung auf über 2 - 3 Minuten hat keine erkennbaren Vorteile mehr gebracht.

Die Temperatur des Produktes in dem Schleuderkneter soll unterhalb der 50°C-Grenze liegen; besonders bevorzugt unterhalb 40°C.

Das neue Verfahren eignet sich ganz besonders für die Herstellung von Cous-Cous, dabei wird das Knöllchen-Produkt in feuchtem Zustand ganz besonders bevorzugt bereits in der Granulatgrösse des gewünschten Endproduktes geformt, gedämpft und anschliessend getrocknet. Längere Versuchsreihen haben ergeben, dass durch gezielte Wahl der Umlaufgeschwindigkeit, Anzahl und Stellung der Schleuderelemente sowie die genaue Menge der Wasserzugabe, ein sehr hoher Prozentsatz der Knöllchen am Austritt aus dem Schleuderkneter bereits mit der richtigen Grösse geformt sind, so dass sich auch die Probleme der Rückförderung des ungedämpften, also feuchten Gutes nicht mehr stellen.

Weiterhin werden bevorzugt vor dem Dämpfer die Knöllchen im wesentlichen auf die Granulatgrösse des Endproduktes kalibriert und Übergrössen reduziert und gemeinsam gedämpft, so dass sich auch die Probleme der Rückförderung der ungedämpften, zu grossen feuchten Agglomerate gar nicht mehr stellen.

Die Knöllchen werden als kontinuierliche Schicht auf ein Dämpfband aufgetragen und im Durchlaufverfahren gedämpft, wobei nach dem Dämpfen die kuchenartigen Bruchstücke wieder in die Knöllchengrösse zerhackt und getrocknet werden.

Weiterhin wird vorgeschlagen, das getrocknete Knöllchenprodukt zu sieben und die Übergrössen, resp. die zusammenhaftenden Knöllchen mit Walzen zu zerkleinern. Der dabei entstehende Feinanteil kann wieder zurück in den Schleuderkneter geführt werden.

Bei einem weiteren ganz besonders vorteilhaften Ausgestaltungsgedanken des erfindungsgemässen Verfahrens wird in einer ersten Stufe das Rohmaterial angefeuchtet, in eine Knöllchenstruktur gebracht, und anschliessend über eine getrennt angetriebene Pressschnecke in Pressdruck gebracht, und über eine Pressform in die gewünschte Form der Teigwaren verpresst.

Es hat sich gezeigt, dass im Stand der Technik insbesondere unmittelbar nach der Wasserzugabe ein nur schlecht kontrollierbarer Prozess abläuft, da gleichzeitig eine Anzahl verschiedener Reaktionen stattfindet:
- das Wasser soll gleichmässig verteilt werden;
- mit dem ersten Kontakt des Wassers mit dem Rohmaterial wird ein Teil des Wassers sofort gebunden, und es bilden sich ganz unterschiedlich grosse Agglomerate;
- durch Druck- und Schlagwirkung bilden sich aber von Beginn erste Teigteilchen mit Ansätzen eines Proteingerüstes;
- ein Teil der Mehl- bzw. Griessteilchen wird ohne Kontakt mit dem Netzwasser durch die Vorrichtung gefördert.

Bereits ein Blick in einen traditionellen Mischtrog zeigt, dass tatsächlich alle Strukturzustände mit wechselnden Anteilen gleichzeitig vorhanden sind.

Bei der besonders vorteilhaften Ausgestaltung wird mit der Verwirbelungsnetzung sowie der Schleuderknetung nicht nur in ruhezeitloser intensiver, sondern auch an jeder Stelle kontrollierter Prozess durchgeführt, so dass am Ende ein Knöllchengut von sehr hoher Gleichmässigkeit erhalten wird.

Bevorzugt werden Verwirbelungsbefeuchter und Schleuderkneter, die als eine Baueinheit mit einem Antrieb mit einer durchgehenden Rotorwelle ausgebildet sind, wobei sie von dem Produkteintritt bis zu dem Produktaustritt eine Speisezone mit Speiseschnecke, eine Befeuchtungszone und anschliessend eine Granulier- und Knöllchenbildungszone aufweist.

Bei einer weiteren bevorzugten Ausführung wird der Schleuderkneter als Doppelrotor ausgebildet.

Bevorzugt weist die Rotorwelle resp. Rotorwellen des Schleuderkneters eine Vielzahl von Arbeits-Platten auf, wobei die Arbeitsplatten im Bereich des Schleuderkneters schräg zwischen -10 und +20 Winkelgraden, bevorzugt -4 und +12 Winkelgraden, zu der Rotorwellenachse eingestellt sind.

Die Rotorwelle weist 400 - 3000, vorzugsweise 600 - 1200 Umdrehungen pro Minute auf.

Eine ganz besonders vorteilhafte Anwendung der Erfindung ist für die Herstellung von Cous-Cous, wobei vorzugsweise Knöllchen in der gewünschten Korngrösse des Cous-Cous- Endproduktes in dem Schleuderkneter geformt, und für die Übergrössen der Knöllchen eine Reduktionsvorrichtung vorgesehen ist, dessen Ausgang mit der Abführleitung des Kalibrierdurchfalles verbindbar, derart, dass alles Knöllchengut gemeinsam über ein Dämpfband und danach über einen Trockner führbar ist.

Bei einer weiteren, sehr vorteilhaften Anwendung wird das im Schleuderkneter geformte Knöllchengut einer Pressschnecke übergeben, von welcher über eine Pressform Teigwaren hergestellt werden.

### Kurze Beschreibung der Erfindung

Die Erfindung wird nun anhand der folgenden Figuren mit weiteren Einzelheiten erläutert. Es zeigen:
- die Figur 1: einen Längenschnitt durch einen Wirbelkneter;
- die Figur 2a: einen Querschnitt II - II der Figur 1 für einen Einrotor-Kneter;
- die Figur 2b: einen Querschnitt III - III der Figur 1 für einen Doppelrotor-Kneter;
- die Figur 3: eine zweite Ausführung der Figuren 1 - 3;
- die Figur 4: ein vereinfachtes Schema für die Herstellung von Cous-Cous bis zur Dämpfstufe;
- die Figur 5: ein Gesamtschema für eine Cous-Cous-Produktionsanlage;
- die Figur 6: zeigt im Faktor 2 verkleinert das Endprodukt aus einem bekannten Mischtrog;
- die Figur 7: zeigt in natürlicher Grösse eine Aufnahme eines Knöllchenproduktes;
- die Figur 8: einen Mikroschnitt 250-fach vergrössert durch ein Knöllchen, wobei das Proteingerüst gut erkennbar ist.
- die Figur 9: zeigt die Vorrichtung des Schleuderkneters vor einer Teigwarenpresse.

### Wege zur Ausführung der Erfindung

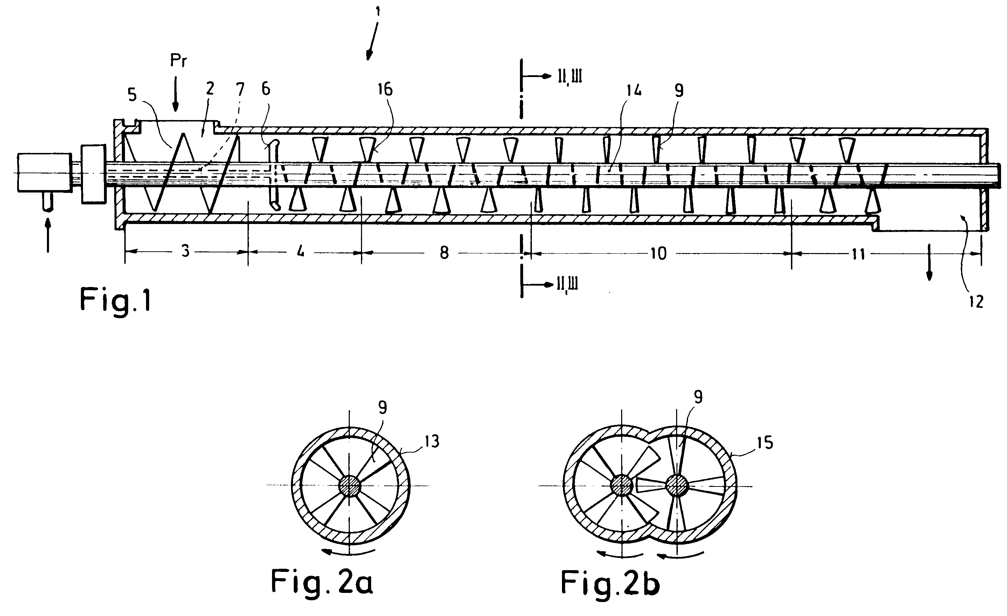

In der Folge wird nun auf die Figuren 1, 2a und 2b Bezug genommen, welche einen Wirbelkneter 1 darstellen. Das Rohmaterial Pr wird über einen Einlass-Stutzen 2 in eine Speisezone 3 dosiert. Eine Paletten-Knetwelle 14 ist durch die ganze Vorrichtung 1 geführt, und weist in der Speisezone 3 eine Einzugsschnecke 5 auf, welche das Produkt erfasst und beschleunigt und einer direkt anschliessenden Befeuchtungszone 4 übergibt.

Am Beginn der Befeuchtungszone 4 werden direkt auf der Paletten-Knetwelle 14 zwei mit umlaufende Spray-Arme 6 angeordnet, welche über eine Bohrung 7 in der Paletten- Knetwelle 11 mit Wasser oder Dampf versorgt werden. In der Befeuchtungszone 4 wird anschliessend an die Spray-Arme 6 eine Anzahl Verwirbelungs- und Mischpaletten 16 angeordnet, und stellen eine gleichmässige Auffeuchtung des Produktes sicher. Anschliessend an die Befeuchtungszone 4 folgt eine Granulierzone 8. Mit der starken Verwirbelung des Produktes wird durch die hohe Umlaufgeschwindigkeit von z.B. 800 - 1200 Umdrehungen pro Minute, und den natürlichen Eigenschaften von z. B. Mehl mit der Wasserzugabe von 10 - 30% über eine Agglomerierung eine lose Granulatform erzeugt. Interessant ist nun, dass durch leicht geneigt eingestellte Knetplatten 9 die Agglomerat-Form direkt in eine Knöllchenform überführt werden kann, was in einer eigentlichen Knetzone 10 erfolgt. Durch Wahl der Umfangsgeschwindigkeit, der Wasserzugabe sowie der Winkellage der Knetplatten 9 kann Einfluss genommen werden auf die Grösse der Granulate, welche im Falle von Cous-Cous ohne weiteres z. B. mit durchschnittlich 3 - 4 mm erreichbar ist, also genau der Teilgrösse des gewünschten Endproduktes. Am Ende jedes Wirbelkneters 1 befindet sich eine Austragszone 11 von welcher, die ein vollständiges Proteingerüst aufweisenden Knöllchen, über einen Produktauslass 12 der weiteren Verarbeitung übergeben werden.

Der Wirbelkneter 1 kann, wie die Figur 2a, einen Schnitt II-II der Figur 1 dargestellt ist, als Einfachrotor-Kneter ausgebildet werden mit einem, im wesentlichen zylindrischen Arbeitsgehäuse 13.

Für Produkte mit höchsten Qualitätsanforderungen und insbesondere bei grossen Durchsatzleistungen wird vorgeschlagen, den Wirbelkneter, wie in der Figur 2b dargestellt ist, als Doppelrotor-Kneter auszubilden, mit 2 Plattenknetwellen 14 sowie einem entsprechenden Doppel-Arbeitsgehäuse 15.

Einen sehr grossen Vorteil beider Ausführungsvarianten liegt darin, dass sich der ganze Arbeitsraum während dem Betrieb durch die Form und Eigenheit der Platten-Knetwelle 14 selbst reinigt.

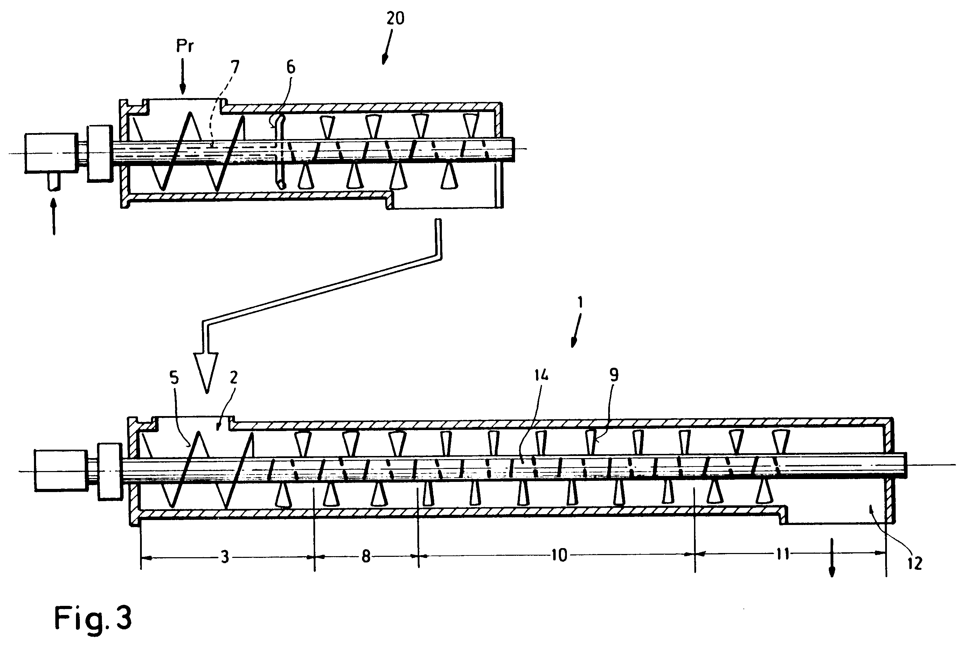

In der Figur 3 findet die Befeuchtungszone in einem getrennten Verwirbelungsbefeuchter 20 statt, wobei der Schleuderkneter 1 keine Wasserzugabe aufweist.

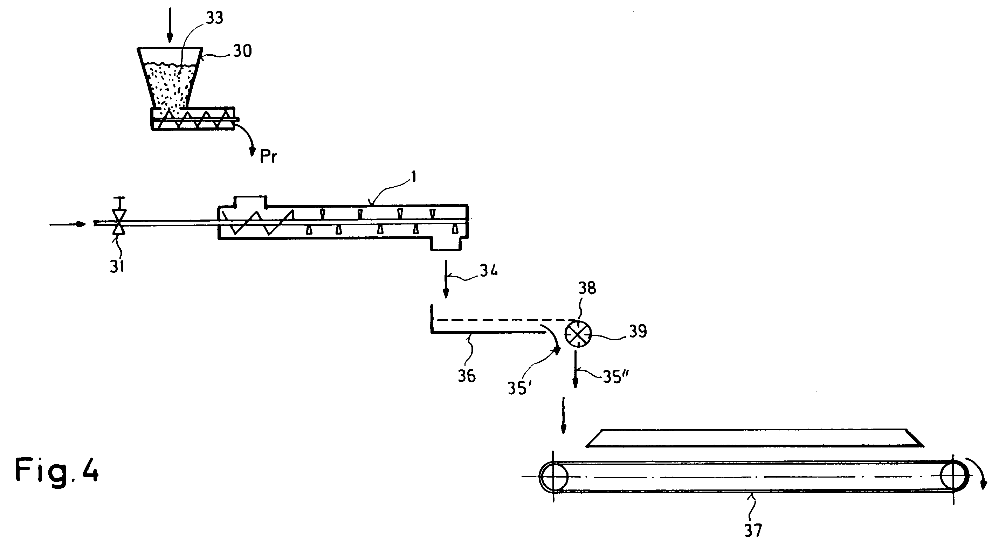

In der Figur 4 ist schematisch eine Anlage für die Herstellung von Cous-Cous bis zur Dämpfung dargestellt. Das Rohmaterial wird z. B. in Mehlform von einem Dosierapparat 30 entsprechend eines bestimmten Durchsatzes und einer gewünschten Wassermenge über eine Steuerung errechnet. Das Wasser wird über einen Wasserzähler 31 gemessen und der Befeuchtungszone 4 des Wirbelkneter 1 eingerührt, und am Ende des Wirbelkneters in Knöllchenform 34 einem Klassiersieb 36 übergeben. Die bereits gute Korngrösse wird als Siebdurchfall 35' direkt einem Dämpfband 37 zugeleitet, wohingegen die Übergrössen 38 vorgängig auf dieselbe Grösse wie der Durchfall 35'' in einer Brech- und Schneidvorrichtung 39 reduziert, und danach ebenfalls dem Dämpfband 37 übergeben werden.

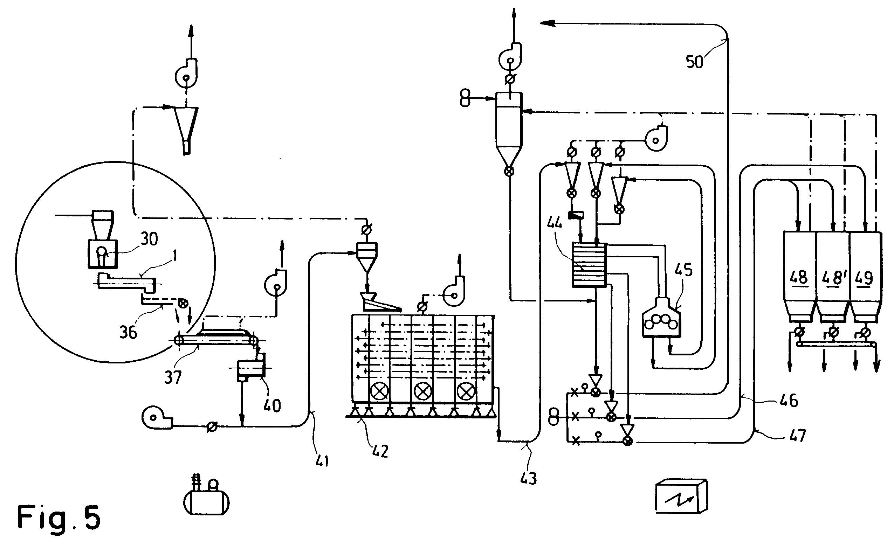

In der Figur 5 ist eine vollständige Anlage für die Herstellung von Cous-Cous dargestellt, wovon nur der erste Teil in der Figur 4 in vergrössertem Massstab dargestellt ist. Von dem Dämpfband 37 wird die fast kuchenartig aussehende Masse in einer Reduktionsvorrichtung 40 wieder auf die Grösse der Knöllchen zurück geführt. Das Produkt wird dann über eine pneumatische Förderleitung 41 in einen Trockner 42 geleitet.

Das trockene Gut gelangt über eine weitere Transportleitung 43 in eine Siebvorrichtung 44. Alle Übergrössen werden über einen Walzenstuhl 45 auf die gewünschte Grösse zerkleinert und nochmals der Siebvorrichtung 44zurückgeführt. Die gewünschte Fraktion wird in zwei Grössenklassen über Förderer 46 resp. 47 in eine entsprechende Lagerzelle 48, 48' resp. 49 gebracht. Die zu feine Fraktion, wird über Förderer 50 wieder zurück in Dosierer 30 geleitet.

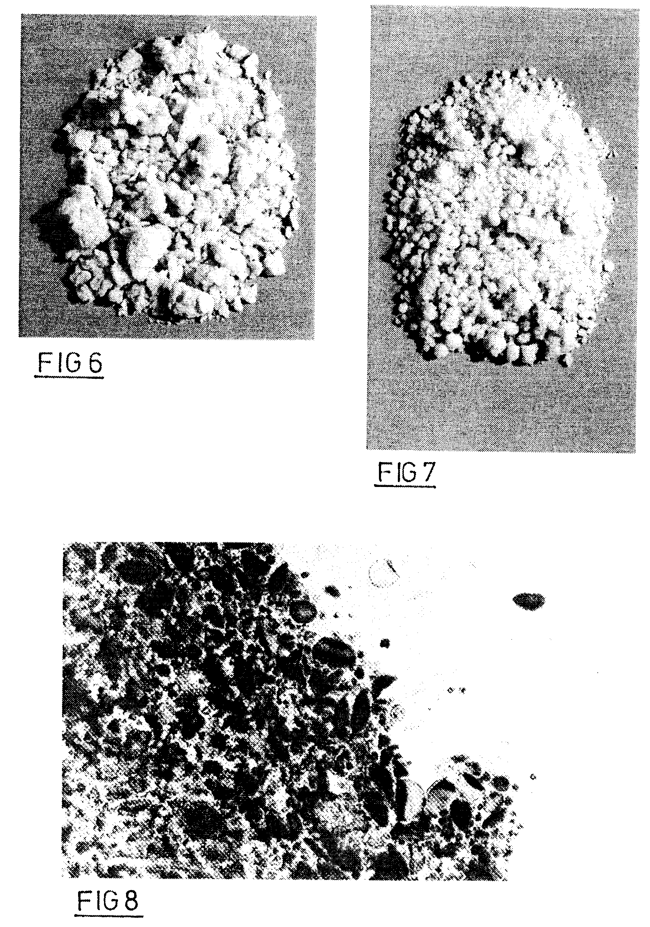

In der Figur 6 ist das Produkt 2:1 verkleinert dargestellt, wie es aus dem Mischtrog nach 14 - 15 Minuten Mischzeit anfällt. Man erkennt teilweise Agglomerate bzw. ganze Teigbrocken.

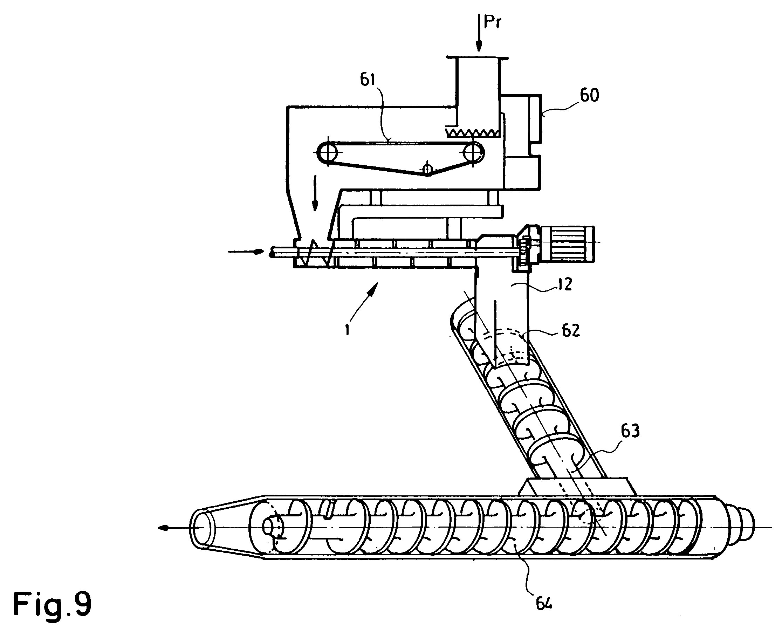

Die Figur 7 zeigt das Knöllchengut wie es von dem Wirbelkneter entfällt und in der Figur 8 ist ein Mikroschnittbild eines Knöllchens das ein vollständig hergestelltes Proteingerüst erkennen lässt.

In der Folge wird nun auf die Figur 9 Bezug genommen, welche eine Anlage zur Herstellung von Teigwarenteig darstellt. Über eine Dosiervorrichtung 60 wird das trockene Gut z. B. Griess über eine Bandwaage 61 in die Speisezone eines Wirbelkneters 1 dosiert. Die Wassermenge wird entsprechend der Figur 1 über eine Spray-Vorrichtung direkt in die Befeuchtungszone gegeben. Das Knöllchengut verlässt über den Produktauslass 12 den Wirbelkneter 1 und gelangt im freien Fall über einen Schacht 62 in eine Überführschnecke 63 von welcher es der eigentlichen Pressschnecke überführt wird, zur Herstellung eines homogenen Teiges, zur Formpressung von Teigwaren.

## Patentansprüche

1. Verfahren zur Herstellung eines knöllchenförmigen Produktes aus Mehl, Dunst oder Griess, insbesondere Cous-cous mittels Befeuchten und Mischen bei Temperaturen von weniger als 50°C, wobei das Proteingerüst voll ausgebildet wird,
dadurch gekennzeichnet,
dass das Rohmaterial (Pr) in einem Schleuderkneter (1) in Form eines Wirbelmischers auf 25 - 40% Wassergehalt aufgefeuchtet und über eine Agglomeration direkt in eine Knöllchenstruktur gebracht wird, wobei die Knöllchen eine übliche Grösse von 3 - 4mm aufweisen.

2. Verfahren nach Patentanspruch 1, dadurch gekennzeichnet, dass das Rohmaterial (Pr) vor der Wasserzugabe beschleunigt und verwirbelt wird und die Wasserzugabe durch mitbewegende Spraydüsen erfolgt.

3. Verfahren nach Patentanspruch 1 oder 2, dadurch gekennzeichnet, dass das aufgefeuchtete Gut ruhezeitlos in den Schleuderkneter (1) gegeben und die Knetzeit wenigstens 10 - 30 Sekunden beträgt.

4. Verfahren nach Patentanspruch 1, dadurch gekennzeichnet, dass die Temperatur des Produktes in dem Schleuderkneter (1) unterhalb 50°C liegt, vorzugsweise unter 40°C liegt.

5. Verfahren nach Patentanspruch 1 - 4 für die Herstellung von Cous-cous, dadurch gekennzeichnet, dass das Produkt mit der Knöllchenstruktur in feuchtem Zustand gedämpft wird.

6. Verfahren nach Patentanspruch 5, dadurch gekennzeichnet, dass vor dem Dämpfer die Knöllchen (34) im wesentlichen auf die Granulatgrösse des Endproduktes kalibriert, und Übergrössen reduziert und ebenfalls gedämpft werden.

7. Verfahren nach Patentanspruch 5 oder 6, dadurch gekennzeichnet, dass die Knöllchen (34) für eine kontinuierliche Dämpfung als Schicht auf einem Dämpfband (37) aufgebracht, nach dem Dämpfen die kuchenartigen Bruchstücke wieder in die Knöllchengrösse mit Walzen zerkleinert werden.

8. Verfahren nach Patentanspruch 7, dadurch gekennzeichnet, dass das Knöllchenprodukt nach der Trocknung in Einzelgranulate aufgebrochen, gesiebt, und die Übergrössen walzenzerkleinert werden, und der anfallende Feinanteil, bzw. Untergrösse, an den Beginn des Verarbeitungsprozesses zurückgegeben wird.

## Claims

1. Process for the production of a nodular product from flour, dunst, or semolina, in particular couscous, by moistening and mixing at temperatures below 50°C, the protein framework being completely developed, characterized in that the raw material (Pr) is moistened to 25-40% water content in a centrifugal mixer (1) in the form of a vortex mixer and, via an agglomeration, is brought directly into a nodular structure, the nodules having a usual size of 3-4 mm.

2. Process according to Patent Claim 1, characterized in that the raw material (Pr) is accelerated and vortexed prior to the addition of water and the water is added by conjointly moving spray nozzles.

3. Process according to Patent Claim 1 or 2, characterized in that the moistened material is passed without a resting time into the centrifugal mixer (1) and the mixing time is at least 10-30 seconds.

4. Process according to Patent Claim 1, characterized in that the product temperature in the centrifugal mixer (1) is below 50°C, preferably below 40°C.

5. Process according to Patent Claim 1 to 4 for the production of couscous, characterized in that the product having the nodular structure is steamed in the moist state.

6. Process according to Patent Claim 5, characterized in that, upstream of the steamer, the nodules (34) are essentially calibrated to the granule size of the end product, and oversizes are reduced and likewise steamed.

7. Process according to Patent Claim 5 or 6, characterized in that the nodules (34) are applied as a layer to a steam belt (37) for continuous steaming, and after the steaming the cake-like fragments are comminuted by rollers back to the nodule size.

8. Process according to Patent Claim 7, characterized in that the nodular product, after drying, is broken up into individual granules, sieved, and the oversizes are roller-comminuted, and the fine fraction produced, or undersize, is recycled to the start of the processing process.

## Revendications

1. Procédé de fabrication d'un produit sous forme de grains à partir de farine, de recoupe ou de semoule, notamment du couscous, par humidification et mélange à des températures de moins de 50°C, la structure protéique étant totalement formée,
caractérisé en ce que la matière première (Pr) est humidifiée à une teneur en eau de 25 - 40% dans un pétrin centrifuge (1) sous forme de malaxeur à tourbillonnement, et est amenée par une agglomération directement à une structure de grains, les grains présentant une grosseur usuelle de 3 - 4 mm.

2. Procédé selon la revendication 1, caractérisé en ce que la matière première (Pr), avant l'addition d'eau, est accélérée et mise en tourbillonnement, et l'addition d'eau s'effectue par des buses d'aspersion accompagnant le mouvement.

3. Procédé selon la revendication 1 ou 2, caractérisé en ce que le produit humidifié est amené, sans temps de repos, dans le pétrin centrifuge (1), et la durée de pétrissage est d'au moins 10 - 30 secondes.

4. Procédé selon la revendication 1, caractérisé en ce que la température du produit dans le pétrin centrifuge (1) se situe en-dessous de 50°C, de préférence en-dessous de 40°C.

5. Procédé selon les revendications 1 à 4, pour la fabrication de couscous, caractérisé en ce que le produit présentant la structure de grains est soumis, dans l'état humide, à une évaporation.

6. Procédé selon la revendication 5, caractérisé en ce qu'avant l'évaporateur, les grains (34) sont calibrés sensiblement à la grosseur de grain du produit fini, et les grains de grosseur trop grande sont réduits et également soumis à l'évaporation.

7. Procédé selon la revendication 5 ou 6, caractérisé en ce que les grains (34), pour assurer une évaporation continue, sont appliqués sous forme de couche sur une bande d'évaporation (37), et après l'évaporation, les fragments sous forme de pains sont à nouveau broyés à l'aide de cylindres à la grosseur de grain des grains (34).

8. Procédé selon la revendication 7, caractérisé en ce que le produit en grains, après le séchage, est fragmenté en granulés individuels, tamisé, et les grains de grosseur trop importante sont broyés par des cylindres, tandis que la fraction trop fine, à savoir les grains de grosseur trop faible sont renvoyés au début du processus de traitement.
